# EUROPÄISCHE PATENTSCHRIFT

(11) **EP 2 085 208 B1**
(45) Veröffentlichungstag und Bekanntmachung des Hinweises auf die Patenterteilung: **29.07.2015**
(21) Anmeldenummer: 09152050.2
(22) Anmeldetag: 04.02.2009
(51) Int. Cl.: B29C 49/48

(54) **Formgehäuse und Vorrichtung mit dem Formgehäuse**
Form housing and apparatus with the form housing
Boîtier de formage et appareil avec le botîer de formage

(30) Priorität: 04.02.2008 DE 102008007631
(43) Veröffentlichungstag der Anmeldung: 05.08.2009
(60) Teilanmeldung: 15170798.1
(73) Patentinhaber: Krones AG, 93073 Neutraubling (DE)
(72) Erfinder: Blochmann, Erik, 93073 Neutraubling (DE); Hüttner, Gerald, 93073 Neutraubling (DE); Schmid, Florian, 93073 Neutraubling (DE)
(74) Vertreter: Bittner, Bernhard

(56) Entgegenhaltungen:
- WO-A-2005/123357
- US-A- 5 993 721
- US-A1- 2004 202 745
- US-B1- 6 447 281
- DATABASE WPI Week 199637 Thomson Scientific, London, GB; AN 1996-366836 XP002529871 -& JP 08 174552 A (HAKKO DENKI SEISAKUSHO KK) 9. Juli 1996 (1996-07-09)
- DATABASE WPI Week 198210 Thomson Scientific, London, GB; AN 1982-18991E XP002529872 -& JP 57 020328 A (DAINIPPON PRINTING CO LTD) 2. Februar 1982 (1982-02-02)

## Beschreibung

Die vorliegende Erfindung bezieht sich auf ein Formgehäuse für Vorrichtungen zum Expandieren von Kunststoffbehältnissen. Aus dem Stand der Technik ist es bekannt, Kunststoffvorformlinge zu Kunststoffbehältnissen zu expandieren. JP 408174552, JP 357020328, WO 2005123357 und US 2004202745 offenbaren solche Vorrichtung. Dabei werden diese Vorformlinge in eine Blasform eingelegt und mit vorgegebenen Druckparametern, beispielsweise mit Druckluft, zu dem Behältnis expandiert. Diese Blasform ist dabei üblicherweise in einem Formgehäuse angeordnet, welches geöffnet werden kann. Dieses Formgehäuse ist einerseits üblicherweise zur Aufnahme unterschiedlicher Blasformen geeignet und bewerkstelligt andererseits angepasste Temperaturen oder angepasste Umgebungsbedingungen für die eigentliche Blasform. Außerhalb des Formgehäuses, welches im Folgenden auch als Mutterform bezeichnet wird, ist üblicherweise noch ein Formträger vorgesehen. Dabei ist es wünschenswert, dieses Formgehäuse thermisch gegenüber dem Formträger wenigstens teilweise zu isolieren. Aus dem Stand der Technik ist es bekannt, zwischen den Formträger und das Formgehäuse Isolierstreifen zur thermischen Isolierung einzulegen. Diese Isolierstreifen arbeiten zufrieden stellend, können jedoch bei ungünstigen Parametern zu Verspannungen des Formgehäuses oder auch des Formträgers und im Extremfall sogar zu Brüchen führen.

Der vorliegenden Erfindung liegt daher die Aufgabe zugrunde, ein Formgehäuse zur Verfügung zu stellen, welches einerseits gleichmäßig isoliert ist, andererseits jedoch auch eine gleichmäßige Kraftaufteilung bewerkstelligt. Dies wird erfindungsgemäß durch den Gegenstand von Anspruch 1 erreicht. Vorteilhafte Ausführungsformen und Weiterbildungen sind Gegenstand der Unteransprüche.

Ein erfindungsgemäßes Formgehäuse für Vorrichtungen zum Expandieren von Kunststoffbehältnissen weist wenigstens zwei zusammensetzbare Formteile auf, welche in einem zusammengesetzten Zustand einen Innenraum zur Aufnahme des zu expandierenden Kunststoffbehältnisses aufweisen. Weiterhin ist wenigstens ein an eine Außenwandung wenigstens eines Formteils anlegbarer Isolierkörper vorgesehen. Erfindungsgemäß weist der Isolierkörper ein gekrümmtes Profil auf, wobei die Krümmung des Isolierkörpers an eine Krümmung der Außenwandung angepasst ist.

Insbesondere kann in einem Innenraum der zusammengesetzten Formteile eine Blasform untergebracht werden, innerhalb der wiederum der Vorformling zu einem Kunststoffbehältnis expandiert werden kann. Bei dem Isolierkörper handelt es sich um ein flächiges Element. Durch die Anpassung der Krümmung des Isolierkörpers an die Krümmung der Außenwandung wird erreicht, dass der Isolierkörper, bei dem es sich bevorzugt um eine Isolierschale handelt, an die Außenwandung direkt oder mittelbar angelegt werden kann. Dies bedeutet, dass der Isolierkörper einerseits direkt an die Außenwandung der Formteile angelegt werden kann, es jedoch auch denkbar und bevorzugt ist, zwischen dem Isolierkörper und der Außenwandung der Formteile Unterlegelemente unterzubringen.

Bei einer weiteren bevorzugten Ausführungsform ist der Isolierkörper um einen Umfangswinkel gekrümmt, der größer ist als 30°, bevorzugt größer als 60°, bevorzugt größer als 90°, besonders bevorzugt größer als 120° und besonders bevorzugt größer als 150°. Damit ist es möglich, den Isolierkörper um einen entsprechend großen Umfangswinkel herum an die Außenwandung anzulegen. Dabei ist es möglich, dass ein Krümmungsradius des Isolierkörpers geringfügig größer ist, als ein entsprechender Krümmungsradius der Außenwandung der Formteile, um auf diese Weise das Anlegen des Isolierkörpers zu erleichtern.

Bei einer weiteren bevorzugten Ausführungsform umgibt der Isolierkörper das Formteil bzw. dessen Außenwandung in der Umfangsrichtung im Wesentlichen vollständig. Durch diese Vorgehensweise ist es möglich, die auf die Isolierschale einwirkenden Kräfte, beispielsweise die von außen einwirkenden Kräfte, auf einer relativ großen Fläche zu verteilen. Auf diese Weise können Spannungen oder auch Brüche der Formteile vermieden werden.

Der Isolierkörper decht einen vorgegebenen Anteil der Außenwandung des Formteils ab, wobei dieser Anteil größer ist als 50 %, größer als 70 %, bevorzugt größer als 80 % und besonders bevorzugt größer als 90 %. Damit wird durch den Isolierkörper ein überwiegender Teil des Formteils und insgesamt des gesamten Formgehäuses abgedeckt, wobei durch diese Vorgehensweise, wie oben erwähnt, eine sehr gleichmäßige Kräfteverteilung über den Isolierkörper möglich ist. Auch kann auf diese Weise eine sehr gleichmäßige Isolierwirkung erreicht werden.

Bei einer weiteren vorteilhaften Ausführungsform besteht der Isolierkörper aus einem Kunststoff bzw. weist einen Kunststoff auf. Bevorzugt wird als Material für den Isolierkörper ein glasfaserverstärkter Verbundstoff verwendet. Weiterhin ist es denkbar, den Isolierkörper aus anderen Materialien herzustellen, wie z.B. aus Keramik.

Bei einer weiteren vorteilhaften Ausführungsform weist der Isolierkörper wenigstens eine Sichtöffnung auf. Dabei kann es sich um Öffnungen geringen Querschnitts handeln, durch welche hindurch festgestellt werden kann, ob unter dem Isolierkörper noch weitere Abstandselemente vorgesehen sind.

Bei einer weiteren vorteilhaften Ausführungsform ist zwischen dem Isolierkörper und dem Formteil wenigstens ein Unterlegkörper angeordnet. Auf diese Weise ist es möglich, sich an unterschiedliche Durchmesser der Formteile anzupassen bzw. eine Anpassung an unterschiedliche Prozesse zu erreichen. Die Formteile werden bevorzugt von einer Flüssigkeit um- bzw. durchströmt, welches für eine gleichmäßige Temperierung dieser Formteile sorgt. In Abhängigkeit von den Temperaturen dieser Flüssigkeit können sich die Formteile unterschiedlich ausdehnen. Durch die Verwendung der besagten Unterlegkörper können diese unterschiedlichen Ausdehnungen kompensiert werden. Vorzugsweise sind die Unterlegkörper aus Metall, und insbesondere aus Blech gefertigt.

Vorzugsweise ist auch der Unterlegkörper ein gekrümmter Körper, wobei die Krümmung des Unterlegkörpers an eine Krümmung des Formteils angepasst ist. Damit weist bevorzugt der Unterlegkörper eine ähnliche Gestalt auf wie der Isolierkörper und kann im Wesentlichen vollständig an diesen angelegt werden. Vorzugsweise ist der Isolierkörper ein flächiges Element und weist eine einheitliche Dicke auf. Auch der Unterlegkörper umgibt vorteilhaft das Formteil im Wesentlichen vollständig.

Bei einer weiteren vorteilhaften Ausführungsform weist der Unterlegkörper wenigstens eine Sichtöffnung auf. Mittels dieser Sichtöffnung des Unterlegkörpers können wiederum Elemente sichtbar sein, die unter diesem Unterlegkörper vorhanden sind, wie insbesondere, aber nicht ausschließlich, ein weiterer Unterlegkörper.

Vorzugsweise weist der Unterlegkörper eine Beschriftung auf, welche für eine Stärke bzw. Dicke des Unterlegkörpers charakteristisch ist. So können beispielsweise auf dem Unterlegkörper Angaben über eine Dicke des Unterlegkörpers in mm angebracht sein. Vorzugsweise liegt die Beschriftung des Unterlegkörpers in einem zusammengebauten Zustand unterhalb einer Sichtöffnung des Isolierkörpers. Dies bedeutet, dass die oben erwähnte Sichtöffnung des Isolierkörpers verwendet werden kann, um durch den Isolierkörper hindurch die Dicke eines darunter liegenden Unterlegkörpers zu bestimmen. Es wäre weiterhin auch möglich, mehrere Unterlegkörper zu verwenden, insbesondere auch Unterlegkörper unterschiedlicher Dicken, um auf diese Weise eine höhere Variabilität für unterschiedliche Ausdehnungskoeffizienten der Formteile zu erreichen.

Die vorliegende Erfindung ist weiterhin auf eine Vorrichtung zum Expandieren von Kunststoffbehältnissen gerichtet, wobei diese Vorrichtung ein Formgehäuse der oben beschriebenen Art aufweist, sowie eine Halterung, welche um dieses Formgehäuse anbringbar ist. Vorzugsweise handelt es sich bei dieser Halterung um einen Formträger, der das Formgehäuse im Wesentlichen vollständig umgibt. Bei dieser Ausführungsform ist damit der Isolierkörper zwischen dem Formträger und dem Formgehäuse angeordnet. Vorzugsweise handelt es sich hier, wie oben ausgeführt, um ein zweiteiliges Formgehäuse, welches aus zwei zusammensetzbaren Formteilen aufgebaut ist. Entsprechend sind auch zwei Isolierkörper vorgesehen, die um die beiden Formteile angelegt werden.

Bei einer vorteilhaften Ausführungsform weist die Vorrichtung eine Blasform auf, die innerhalb des Formgehäuses festsetzbar ist.

Weitere Vorteile und Ausführungsformen ergeben sich aus den beigefügten Zeichnungen:
Darin zeigen:
   - Fig. 1: ein Formgehäuse nach dem Stand der Technik;
   - Fig. 2: ein erfindungsgemäßes Formgehäuse;
   - Fig. 3: eine Explosionsansicht eines erfindungsgemäßen Formgehäuses; und
   - Fig. 4: eine Detaildarstellung des Formgehäuses aus Fig. 2.
   - Fig. 5: eine Vorrichtung zum Expandieren von Kunststoffbehältnissen.

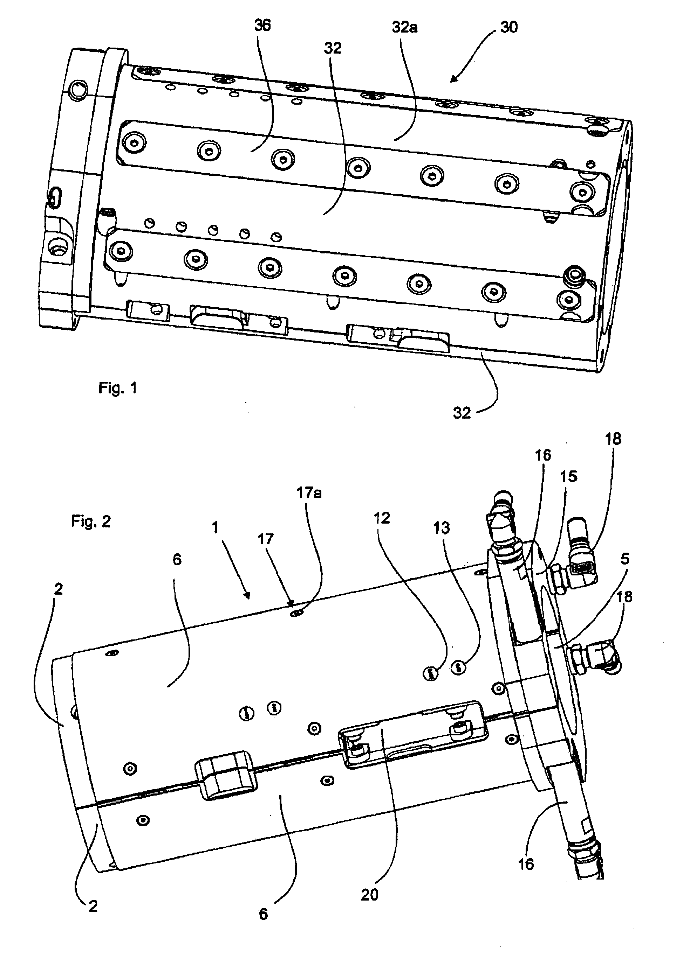

Figur 1 zeigt ein Formgehäuse 30 nach dem Stand der Technik. Dieses Formgehäuse 30 weist dabei zwei Formteile 32 auf, wobei das untere Formteil 32 in Fig. 1 im Wesentlichen von dem oberen Formteil verdeckt wird. Im Inneren dieses Formteils kann, wie oben erwähnt, eine Blasform zum Blasen der Behältnisse angeordnet werden. Das Bezugszeichen 36 bezieht sich auf Isolierstreifen, die an der Außenwandung 32a des Formteils angeordnet sind. Dabei sind in diesem Falle Ausnehmungen vorgesehen, in welche die Isolierstreifen 36 eingelegt und anschließend verschraubt werden. Auf diese Weise ist es möglich, dass es im Falle von Ausdehnungen oder auch von unterschiedlichen Ausdehnungskoeffizienten der Isolierstreifen 36 in den Formteilen 32 Verspannungen bewirkt und es im Extremfall sogar zu Brüchen der Formteile 32 kommen kann.

Figur 2 zeigt einen erfindungsgemäßes Formgehäuse 1. Auch dieses Formgehäuse 1 weist zwei Formteile 2 auf, welche aneinander angelegt werden können. Im angelegten Zustand wird zwischen diesen Formteilen 2 ebenfalls ein Innenraum 5 gebildet, innerhalb dessen eine Blasform mit den zu blasenden Behältnis vorgesehen sein kann. Die beiden Formteile 2 weisen jeweils in ihren Außenwandungen 15 Ausnehmungen 20 auf, welche zum Öffnen des Formgehäuses 1 dienen.

Während des einzelnen Blasvorgangs können auf diese Weise die beiden Formteile und damit das Formgehäuse geöffnet werden, um auf diese Weise Zugang zu der innen liegenden Blasform mit dem Behältnis zu erhalten. Auch die Blasform selbst wird auf diese Weise mitgeöffnet. Um die beiden Formteile 2 sind hier Isolierkörper 6 angeordnet. Genauer gesagt, wird als Isolierkörper hier eine Schale aus einem glasfaserverstärkten Verbundstoff verbaut. Unter diesem Isolierkörper befinden sich vorzugsweise noch Unterlegkörper wie Unterlegbleche, welche hier jedoch verdeckt sind. Mit Hilfe dieser Unterlegkörper kann der Außendurchmesser des Formgehäuses bzw. der Mutterform eingestellt werden.

Es wäre auch möglich, die Isolierkörper aus einem speziellen Isolierwerkstoff bzw. einem Glasfaserverbundstoff herzustellen. Während bei der in Fig. 1 gezeigten Ausführungsform das Formgehäuse nur über die Isolierstreifen 36 an dem Formträger anliegt, tritt bei der erfindungsgemäßen Ausführungsform ein flächiger Kontakt über den gesamten Isolierkörper 6 hinweg statt. Die Bezugszeichen 16 und 18 beziehen sich auf Zuleitungen bzw. Ableitungen, um in das Innere der Außenwandung 15 der Formteile 2 Flüssigkeit einzuführen, um diese Formteile zu erwärmen. An diese Anschlüsse 16 und 18 können Schläuche angeschlossen werden, um den Formteilen die jeweilige Flüssigkeit zuzuführen. Damit dienen die Schläuche und auch die Anschlüsse zur Temperierung des Formgehäuses. Man erkennt, dass die Krümmung der Außenwandung 15 der Formteile 2 an die Krümmung des Isolierkörpers 6 angepasst ist.

Die Bezugszeichen 12 und 13 beziehen sich auf Sichtöffnungen in dem Isolierkörper 6, um Beschriftungen von darunter angeordneten Unterlegkörpern sehen zu können. Das Bezugszeichen 17 bezieht sich auf Schraubverbindungen, um den Isolierkörper 6 an den Formteilen 2 anzuordnen. Man erkennt, dass im Vergleich zu der in Fig. 1 gezeigten Ausführungsform wesentlich weniger derartiger Schraubverbindungen nötig sind. Die Köpfe 17a dieser Schraubverbindungen sind hierbei gegenüber der Oberfläche des Isolierkörpers 6 abgesenkt, so dass nach außen ein Kontakt nur über die Isolierkörper 6, nicht aber über die Köpfe 17a der Schraubverbindungen 17 stattfindet. Insgesamt ist es möglich, den Isolierkörper 6 mit einer geringen Anzahl von Schrauben, hier beispielsweise mit lediglich 9 Schrauben, zu befestigen.

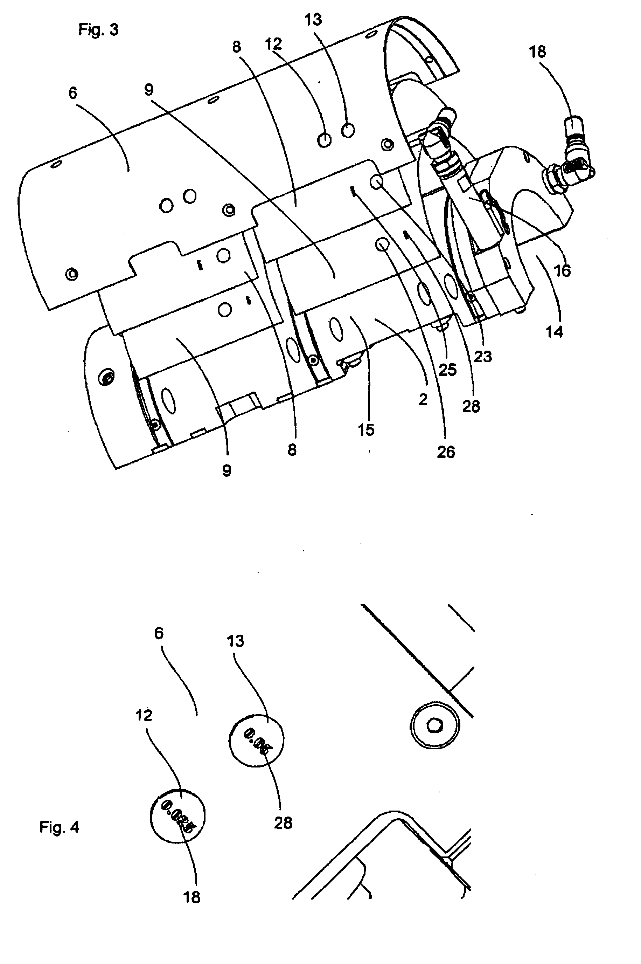

Figur 3 zeigt eine Explosionsdarstellung des in Figur 2 gezeigten Formgehäuses 1. Man erkennt, dass es möglich ist, unter dem Isolierkörper 6 zwei Unterlegkörper 8 und 9 vorzusehen. Dabei weisen diese Unterlegkörper falls gewünscht, unterschiedliche Dicken auf. Falls beispielsweise als Dicke für den oberen Unterlegkörper 8 eine Dicke von 0,025 mm und für den unteren Unterlegkörper 9 eine Dicke von 0,05 verwendet wird, können durch geeignete Zusammenstellung dieser Unterlegkörper Durchmesserbereiche von 0,15 mm eingestellt werden, je nachdem ob nur der Unterlegkörper 9, nur der Unterlegkörper 8 oder beide Unterlegkörper oder kein Unterlegkörper verwendet wird.

Dieser Einstellbereich genügt in jedem Falle, um die unterschiedlichen Ausdehnungen, welche durch unterschiedliche Temperaturen innerhalb des Formteils hervorgerufen werden, auszugleichen. Bevorzugt werden die Unterlegkörper 9 und 8 zweiteilig ausgebildet, so dass in Fig. 2 zwei Unterlegkörper 8 und zwei Unterlegkörper 9 gezeigt sind. Ein entsprechend zusammengesetztes Gehäuse würde hier insgesamt vier Unterlegkörper 8 und vier Unterlegkörper 9 aufweisen. Dabei sind die einzelnen Unterlegkörper 8, 9 jeweils gleichartig gestaltet.

Es wäre grundsätzlich möglich, die Unterlegkörper auch gemeinsam mit dem Isolierkörper 6 zu verschrauben, zur Vermeidung von Verspannungen erfolgt jedoch die Verschraubung des Isolierkörpers lediglich direkt über entsprechende Bohrungen 22 an den Formteilen. Die Unterlegkörper sind hier weder mit den Formteilen 2 noch mit dem Isolierkörper 6 verschraubt.

Man erkennt, dass die Öffnungen 24 in dem Isolierkörper nach innen weisende Schrägen aufweisen, um, wie oben angemerkt, den Kopf 17a der Schraubkörper 17 darin einzusenken. Man erkennt, dass der obere Unterlegkörper 8 eine Öffnung 23 und eine Beschriftung 25 aufweist. Der Unterlegkörper 9 weist eine Öffnung 26 und eine Beschriftung 28 auf. Dabei ist die Öffnung 23 des Unterlegkörpers 8 derart angeordnet, dass sie im zusammengebauten Zustand unter der Öffnung 13 des Isolierkörpers 6 liegt.

Die Beschriftung 25 ist derart angeordnet, dass in zusammengebauten Zustand unter der Öffnung 12 des Isolierkörpers 6 liegt. Entsprechend ist auch die Beschriftung 28 des Unterlegkörpers 9 derart angeordnet, dass sie unter den beiden Öffnungen 23 und 13 liegt. Die Öffnung 26 ist ebenfalls so angeordnet, dass sie zusammengebauten Zustand unter der Öffnung 12 des Isolierkörpers 6 liegt.

Figur 4 zeigt eine vergrößerte Darstellung der in Fig. 2 gezeigten Ausführungsform. Man erkennt hier, dass durch die beiden Öffnungen 12 und 13 die beiden Beschriftungen 25 und 28 erkennbar sind. Dabei wird die Beschriftung 25 des Unterlegkörpers 8 direkt durch die Öffnung 12 hindurch erkannt, wo hingegen die Beschriftung 28 des Formkörpers 19 durch die Öffnung 13 und die Öffnung 23 des Unterlegkörpers 8 sichtbar ist. Auf diese Weise kann erreicht werden, dass unabhängig von der Anordnung der beiden Formkörper 8 und 9, stets durch die Öffnungen 12 und 13 sichtbar ist, ob und ggf. welche Unterlegkörper unterhalb des Isolierkörpers 6 angeordnet sind. Auf diese Weise ergibt sich nicht nur eine Einstellmöglichkeit des Außendurchmessers des Isolierkörpers sondern auch eine bequeme Ablesemöglichkeit für den Benutzer und damit eine Information darüber, welche Unterlegkörper verwendet werden.

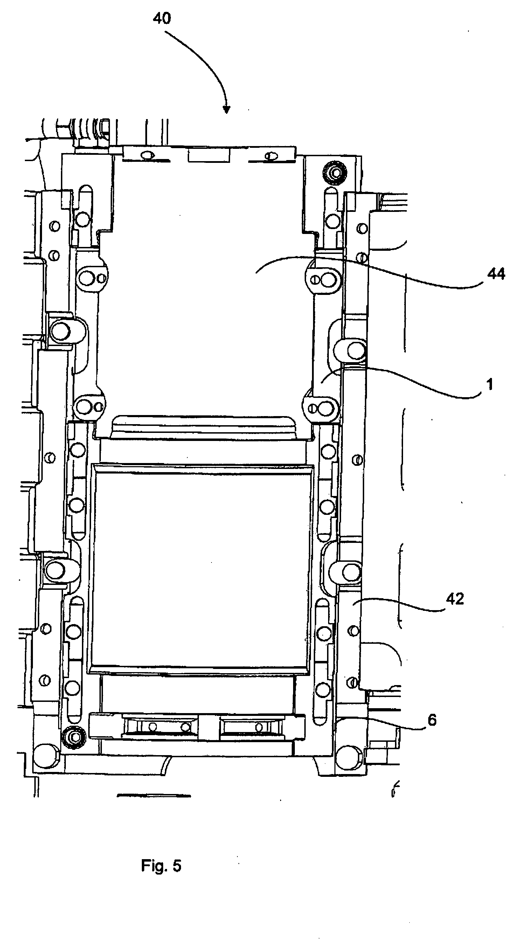

Fig. 5 zeigt eine Vorrichtung 40 zum Expandieren von Kunststoffbehältnissen. Diese Vorrichtung 40 weist eine Halterung bzw. einen Formträger 42 auf, innerhalb dessen das Formgehäuse 1 fest angeordnet ist. Innerhalb des Formgehäuses 1 ist wiederum fest eine Blasform 44 angeordnet. Die einzelnen Konturen dieser Blasform, welche auf das zu erzeugende Behältnis übertragen werden, sind in Fig. 5 nicht dargestellt. Zwischen dem Formgehäuse 1 und dem Formträger 42 ist ein Isolierkörper 6 in Form der erfindungsgemäßen Isolierschale erkennbar.

## Patentansprüche

1. Formgehäuse (1) für Vorrichtungen zum Expandieren von Kunststoffbehältnissen mit wenigstens zwei zusammensetzbaren Formteilen (2), welche in einem zusammengesetzten Zustand einen Innenraum zur Aufnahme des zu expandierenden Kunststoffbehältnisses aufweisen, mit wenigstens einem an eine Außenwandung (15) wenigstens eines Formteils (2) anlegbaren Isolierkörper (6), der das Formgehäuse gegenüber einem Formträger wenigstens teilweise thermisch isolieren kann, wobei der Isolierkörper (6) ein gekrümmtes Profil aufweist, wobei die Krümmung des Isolierkörpers (6) an eine Krümmung der Außenwandung (15) angepasst ist.
**dadurch gekennzeichnet, dass** der Isolierkörper ein flächiges Element ist und einen vorgegebenen Anteil der Außenwandung des Formteils abdeckt, wobei dieser Anteil größer ist als 50%.

2. Formgehäuse (1) nach Anspruch 1,
**dadurchgekennzeichnet, dass** der Isolierkörper (6) um einen Winkel gekrümmt ist, der größer ist als 30°, bevorzugt größer als 60°, bevorzugt größer als 90°, bevorzugt größer als 120° und bevorzugt größer als 150°.

3. Formgehäuse (1) nach Anspruch 1,
**dadurch gekennzeichnet, dass** der Isolierkörper (6) das Formteil (2) in Umfangsrichtung im Wesentlichen vollständig umgibt.

4. Formgehäuse (1) nach wenigstens einem der vorangegangenen Ansprüche,
**dadurch gekennzeichnet, dass** der Isolierkörper (6) einen vorgegebenen Anteil der Außenwandung des Formteils abdeckt, wobei dieser Anteil größer ist als 70%, bevorzugt größer als 80% und bevorzugt größer als 90%.

5. Formgehäuse (1) nach wenigstens einem der vorangegangenen Ansprüche,
**dadurch gekennzeichnet, dass** der Isolierkörper (6) aus einem Kunststoff besteht,

6. Formgehäuse (1) nach wenigstens einem der vorangegangenen Ansprüche,
**dadurch gekennzeichnet, dass** der Isolierkörper (6) wenigstens eine Sichtöffnung (12, 13) aufweist.

7. Formgehäuse (1) nach wenigstens einem der vorangegangenen Ansprüche,
**dadurch gekennzeichnet, dass** zwischen dem Isolierkörper und dem Formteil (2) wenigstens ein Unterlegkörper (8) angeordnet ist.

8. Formgehäuse (1) nach Anspruch 7,
**dadurch gekennzeichnet, dass** der Unterlegkörper (8) ein gekrümmter Körper ist, wobei die Krümmung des Unterlegkörpers an eine Krümmung des Formteils (2) angepasst ist.

9. Formgehäuse (1) nach Anspruch 7,
**dadurch gekennzeichnet, dass** der Unterlegkörper (8) wenigstens eine Sichtöffnung (16) aufweist.

10. Formgehäuse (1) nach Anspruch 9,
**dadurch gekennzeichnet, dass** die Sichtöffnung (23, 26) des Unterlegkörpers (8) in einem zusammengebauten Zustand unterhalb einer Sichtöffnung (12, 13) des Isolierkörpers (6) liegt.

11. Formgehäuse (1) nach Anspruch 7,
**dadurch gekennzeichnet, dass** der Unterlegkörper (8) eine Beschriftung (18) aufweist, welche für eine Stärke des Unterlegkörpers (8) charakteristisch ist.

12. Formgehäuse (1) nach Anspruch 11,
**dadurch gekennzeichnet, dass** die Beschriftung (18) des Unterlegkörpers (8) in einem zusammengebauten Zustand unterhalb einer Sichtöffnung des Isolierkörpers liegt.

13. Vorrichtung (40) zum Expandieren von Kunststoffbehältnissen mit einem Formgehäuse (1) nach dem Oberbegriff von Anspruch 1 und einer Halterung (42), welche um dieses Formgehäuse (1) anbringbar ist, wobei der Isolierkörper (6) einen vorgegebenen Anteil der Außenwandung des Formteils abdeckt, wobei dieser Anteil größer ist als 50%
**dadurch gekennzeichnet, dass** der Isolierkörper zwischen der Halterung (42) und dem Formgehäuse (1) angeordnet ist.

14. Vorrichtung (40) nach Anspruch 13,
**dadurch gekennzeichnet, dass** die Vorrichtung eine Blasform (44) aufweist, die innerhalb des Formgehäuses (1) festsetzbar ist.

## Claims

1. Mould housing (1) for apparatuses for expanding plastics material containers, with at least two mould parts (2) which can be assembled together and which in an assembled state have an interior space for accommodating the plastics material container that is to be expanded, and comprising at least one insulating body (6) which can be placed against an outer wall (15) of at least one mould part (2) which is able to isolate the mould housing with respect to the mould carrier at least in part in a thermal manner, wherein the insulating body (6) has a curved profile, wherein the curvature of the insulating body (6) is adapted to a curvature of the outer wall (15), **characterized in that** the insulating body is a flat element and covers a predefined portion of the outer wall of the mould part, wherein this portion is greater than 50%.

2. Mould housing (1) according to claim 1, **characterised in that** the insulating element (6) is curved by an angle which is greater than 30°, preferably greater than 60°, preferably greater than 90°, preferably greater than 120° and preferably greater than 150°.

3. Mould housing (1) according to claim 1, **characterised in that** the insulating body (6) essentially completely surrounds the mould part (2) in the circumferential direction.

4. Mould housing (1) according to at least one of the preceding claims, **characterised in that** the insulating body (6) covers a predefined portion of the outer wall of the mould part, wherein this portion is greater than 70%, preferably greater than 80% and particularly preferably greater than 90%.

5. Mould housing (1) according to at least one of the preceding claims, **characterised in that** the insulating element (6) is made from a plastic.

6. Mould housing (1) according to at least one of the preceding claims, **characterised in that** the insulating element (6) has at least one viewing opening (12, 13).

7. Mould housing (1) according to at least one of the preceding claims, **characterised in that** at least one underlay body (8) is arranged between the insulating body and the mould part (2).

8. Mould housing (1) according to claim 7, **characterised in that** the underlay body (8) is a curved body, wherein the curvature of the underlay body is adapted to a curvature of the mould part (2).

9. Mould housing (1) according to claim 7, **characterised in that** the underlay body (8) has at least one viewing opening (16).

10. Mould housing (1) according to claim 9, **characterised in that** the viewing opening (23, 26) of the underlay body (8) lies below a viewing opening (12, 13) of the insulating body (6) in an assembled state.

11. Mould housing (1) according to claim 7, **characterised in that** the underlay body (8) has an inscription (18) which is characteristic of a thickness of the underlay body (8).

12. Mould housing (1) according to claim 11, **characterised in that** the inscription (18) of the underlay body (8) lies below a viewing opening of the insulating body in an assembled state.

13. Apparatus (40) for expanding plastics material containers, with a mould housing (1) according to the preamble of claim 1 and a holder (42) which can be fitted around this mould housing (1), wherein the insulating body (60) covers a predefined portion of the outer wall of the mould part, wherein this portion is greater than 50%, **characterized in that** the insulating body is arranged between the holder (42) and the mould housing.

14. Apparatus (40) according to claim 13, **characterised in that** the apparatus comprises a blow mould (44) which can be fixed inside the mould housing (1).

## Revendications

1. Carter de moulage (1) pour des dispositifs d'expansion de récipients en matière plastique avec au moins deux parties de moules (2) pouvant être assemblées, qui, dans un état assemblé, présentent un espace interne pour le logement du récipient en matière plastique à prendre de l'expansion, avec au moins un corps isolant (6) pouvant être appuyée contre une paroi externe (15) d'au moins une pièce moulée (2), qui permet d'isoler thermiquement au moins partiellement le carter de moulage vis-à-vis d'un support de moule, l'élément isolant (6) présentant un profil incurvé, la courbure de l'élément isolant (6) étant adaptée à une courbure de la paroi externe (15), **caractérisé en ce que** le corps isolant est un élément plat et recouvre une partie prédéterminée de la paroi externe de la pièce moulée, cette partie étant supérieure à 50%.

2. Carter de moulage (1) selon la revendication 1, **caractérisé en ce que** l'élément isolant (6) est courbé d'un angle qui est supérieur à 30°, de préférence supérieur à 60°, de préférence supérieur à 90°, de préférence supérieur à 120° et de préférence supérieure à 150°.

3. Carter de moulage (1) selon la revendication 1, **caractérisé en ce que** l'élément isolant (6) entoure la pièce moulée (2) essentiellement entièrement sur la circonférence.

4. Carter de moulage (1) selon au moins l'une des revendications précédentes, **caractérisé en ce que** le corps isolant (6) recouvre une partie prédéterminée de la paroi externe de la pièce moulée, cette partie étant supérieure à 70%, de préférence supérieure à 80% et de préférence supérieure à 90%.

5. Carter de moulage (1) selon au moins l'une des revendications précédentes, **caractérisé en ce que** le corps isolant (6) est constitué d'une matière plastique.

6. Carter de moulage (1) selon au moins l'une des revendications précédentes, **caractérisé en ce que** le corps isolant (6) présente au moins un regard (12, 13).

7. Carter de moulage (1) selon au moins l'une des revendications précédentes, **caractérisé en ce que**, entre le corps isolant et la pièce moulée (2), se trouve au moins un corps de calage (8).

8. Carter de moulage (1) selon la revendication 7, **caractérisé en ce que** le corps de calage (8) est un corps incurvé, la courbure du corps de calage étant adaptée à une courbure de la pièce moulée (2).

9. Carter de moulage (1) selon la revendication 7, **caractérisé en ce que** le corps de calage (8) présente au moins une ouverture de regard (16).

10. Carter de moulage (1) selon la revendication 9, **caractérisé en ce que** l'ouverture de regard (23, 26) du corps de calage (8) se trouve, dans un état assemblé, en dessous d'une ouverture de regard (12, 13) du corps isolant (6).

11. Carter de moulage (1) selon la revendication 7, **caractérisé en ce que** le corps de calage (8) présente un marquage (18) caractéristique d'une épaisseur du corps de calage (8).

12. Carter de moulage (1) selon la revendication 11, **caractérisé en ce que** le marquage (18) du corps de calage (8) se trouve, dans un état assemblé, en dessous d'un regard du corps isolant.

13. Dispositif (40) pour l'expansion de récipients en matière plastique avec un carter de moulage (1) selon le préambule de la revendication 1 et un support (42), qui peut être disposé autour de ce carter de moulage (1), le corps isolant (6) recouvrant une partie prédéterminée de la paroi externe de la pièce moulée, cette partie étant supérieure à 50%, **caractérisé en ce que** le corps isolant est disposé entre le support (42) et le carter de moulage (1).

14. Dispositif (40) selon la revendication 13, **caractérisé en ce que** le dispositif comprend un moule de soufflage (44) qui peut être fixée à l'intérieur du carter de moulage (1).
